# EUROPEAN PATENT APPLICATION

(11) **EP 4 769 716 A1**
(43) Date of publication of application: **01.07.2026**
(21) Application number: 24877636.1
(22) Date of filing: 11.10.2024
(51) Int. Cl.: H01M 50/242, H01M 10/6554, H01M 10/623, H01M 50/247

(54) **ELECTRONIC DEVICE COMPRISING BATTERY PROTECTION MEMBER**

(30) Priority: 11.10.2023 KR 20230135355; 08.11.2023 KR 20230153862
(71) Applicant: SAMSUNG ELECTRONICS CO., LTD., Yeongtong-gu Suwon-si, Gyeonggi-do 16677 (KR)
(72) Inventor: HWANG, Seongyu, Gyeonggi-do 16677 (KR)
(74) Representative: Gulde & Partner
(86) International application number: PCT/KR2024/096317
(87) International publication number: WO 2025/080101

(57) **Abstract**

Disclosed are a battery protection member and an electronic device comprising same. An electronic device according to various embodiments of the present invention comprises a battery and a battery protection member. The battery protection member may comprise: a plurality of porous membrane layers including pores and stacked one on another; a non-Newtonian fluid immersed in the porous membrane layers; and a pouch surrounding the exterior of the plurality of porous membrane layers.

## Description

### [Technical Field]

Various embodiments of the present invention relate to an electronic device, and more particularly, to an electronic device comprising a battery protection member.

### [Background Art]

Electronic devices include batteries capable of storing and outputting electrical energy for portability. Electronic devices may include secondary batteries with high energy density, such as lithium secondary batteries.

Electronic devices may be subject to external impacts, such as being dropped, crushed, and/or penetrated, during the use. Since batteries in electronic devices may be at risk of damage and/or fire because of external impacts, electronic devices may protect the battery from external impacts by using components such as a housing and/or frame.

Electronic devices need to reduce size and weight to improve portability, user experience, and design. Consequently, the size of various components, such as the housing and/or frame of electronic devices, is being reduced.

### [Disclosure of Invention]

### [Solution to Problem]

As the thickness and weight of electronic devices decrease, the thickness and/or rigidity of the frame and/or housing protecting the battery also decrease, which has increased the risk of battery damage due to external impact.

Additionally, when the volume and shape of a battery change because of gas generation inside the battery as the battery is charged and discharged during the use of an electronic device, the components protecting the battery may not properly deform in response to the changes in the volume and shape of the battery, and may apply pressure to the battery, thereby damaging the battery. In the case that a gap is provided between the housing and the battery or a cushioning member such as sponge is added in response to the aforementioned changes in the volume and shape of the battery, the overall thickness of the electronic device may increase.

According to various embodiments of the present invention, a battery protection member capable of protecting a battery from impact and flexibly responding to changes in the volume and shape of the battery and an electronic device including the same may be provided.

An electronic device according to various embodiments of the present invention comprises a battery and a battery protection member. The battery protection member may comprise: at least one porous membrane layer including pores and stacked one on another; a non-Newtonian fluid immersed in the at least one porous membrane layer; and a pouch surrounding the exterior of the at least one porous membrane layer.

A battery protection member according to various embodiments of the present invention, as the battery protection member of the electronic device including the battery, may comprise: at least one porous membrane layer including pores and stacked one on another; a non-Newtonian fluid immersed in the at least one porous membrane layer; and a pouch surrounding the exterior of the at least one porous membrane layer.

According to various embodiments of the present invention, a battery protection member may be provided that, when an impact is applied from the outside, protects the battery from external impact and penetration by thickening the non-Newtonian fluid, and when there is no impact, provides flexibility to respond to changes in volume and shape resulting from battery swelling.

In addition, various effects may be provided, either directly or indirectly, through this document.

### [Brief Description of Drawings]

In connection with the description of the drawings, the same or similar reference numerals may be used for the same or similar components.
FIG. 1 is a block diagram of an electronic device within a network environment according to various embodiments of the present disclosure.
FIG. 2 is an internal plan view and a side view illustrating an electronic device according to various embodiments.
FIG. 3a is a plan view illustrating a battery and a battery protection member.
FIG. 3b is a cross-sectional view of the battery protection member.
FIG. 3c is a cross-sectional view of the battery and battery protection member.
FIG. 3d is a perspective view illustrating the electrodes of the battery in an unfolded state.
FIG. 4a is a plan view illustrating a battery and a battery protection member.
FIG. 4b is a cross-sectional view illustrating a battery and a battery protection member.
FIG. 5 is a cross-sectional view illustrating a battery protection member according to various embodiments.
FIG. 6a is a plan view illustrating a porous membrane layer according to various embodiments.
FIG. 6b a cross-sectional view illustrating a porous membrane layer according to various embodiments.
FIG. 6c and FIG. 6d are plan views illustrating porous membrane layers according to various embodiments.

### [Mode for the Invention]

The following various embodiments are described in detail with reference to the attached drawings.

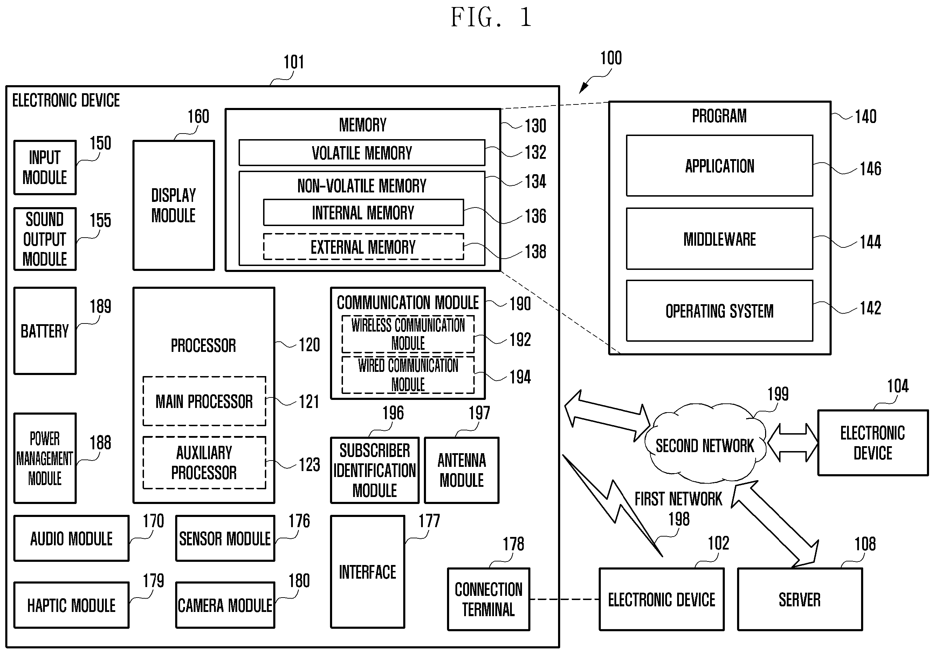

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

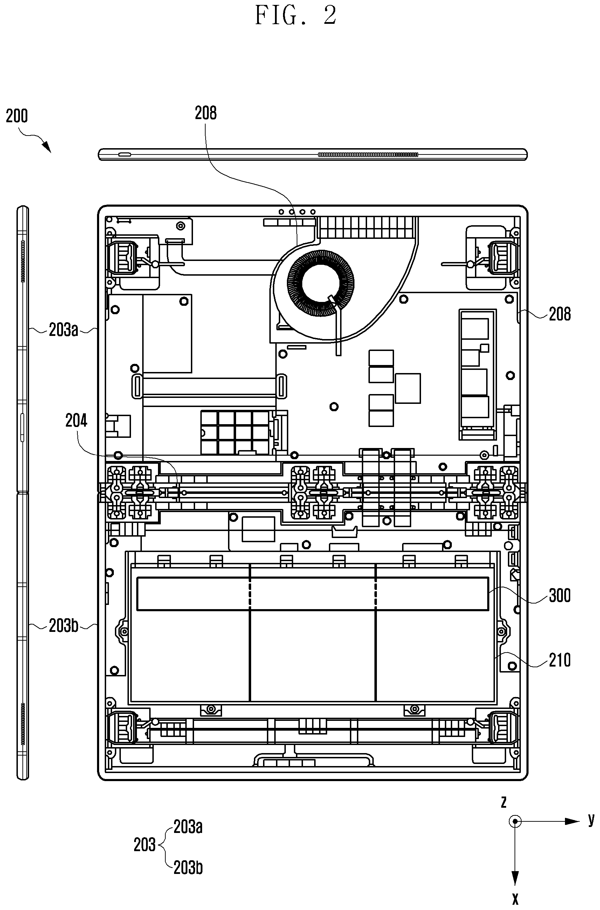

FIG. 2 is an internal plan view and a side view illustrating an electronic device 200 according to various embodiments.

With reference to FIG. 2, an electronic device 200 (e.g., the electronic device 101 of FIG. 1) may include a housing 203, a substrate 202, and a battery 210.

The housing 203 may be a member that at least partially surrounds the exterior of the electronic device 200 to protect internal components such as the substrate 202 and the battery 210 of the electronic device 200, and provides a space in which the components of the electronic device 200 are disposed. In various embodiments, the housing 203 may include a first housing 203a, a second housing 203b, and a hinge 204. The hinge 204 may be a member that rotatably couples the first housing 203a and the second housing 203b to each other. In various embodiments, the housing 203 of the electronic device 200 may have a folded state, an unfolded state, or a state between the folded and unfolded states by the hinge.

The substrate 202 may be a member formed with a circuit formed to allow various components (e.g., a processor 120, memory 130) of the electronic device 200 to be disposed and electrically interconnected. In various embodiments, the electronic device 200 may include a heat dissipation device 208 (e.g., a fan) for dissipating heat generated from the components disposed on the substrate 202.

A battery 210 (e.g., the battery 189 of FIG. 1) may be a component that stores electrical energy and supplies power to electrical components of an electronic device 200. The battery 210 may include a positive electrode 212a and a negative electrode 212b. In various embodiments, the electronic device 200 may include a battery protection member 300 that protects the battery 210 from impact and penetration from the outside of the battery 210. The battery 210 and the battery protection member 300 will be described later.

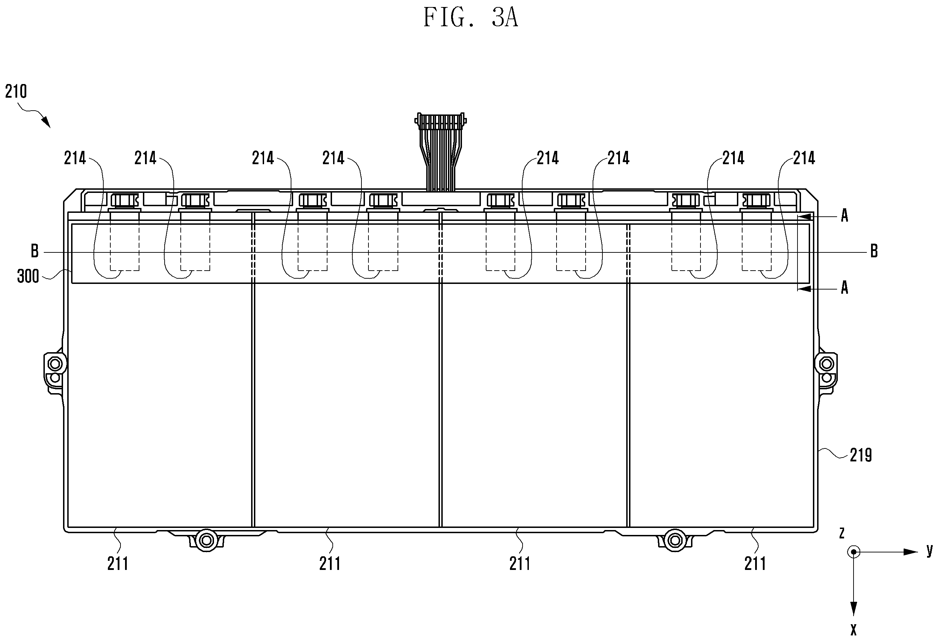

FIG. 3a is a plan view illustrating a battery 210 and a battery protection member 300.

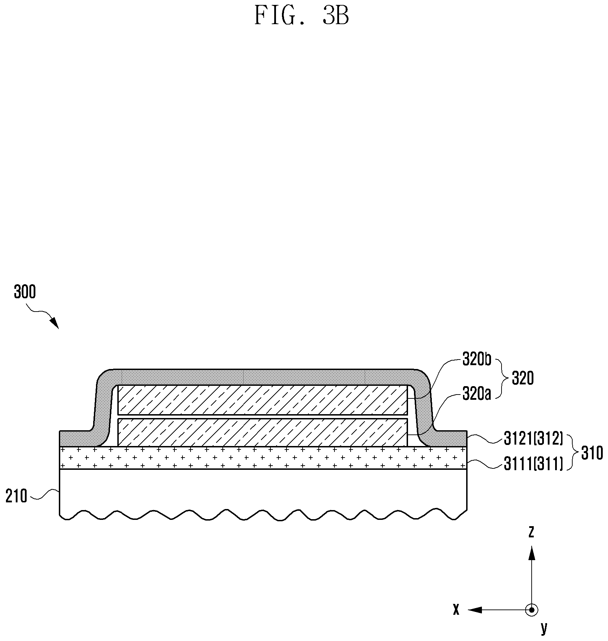

FIG. 3b is a cross-sectional view of a battery protection member 300.

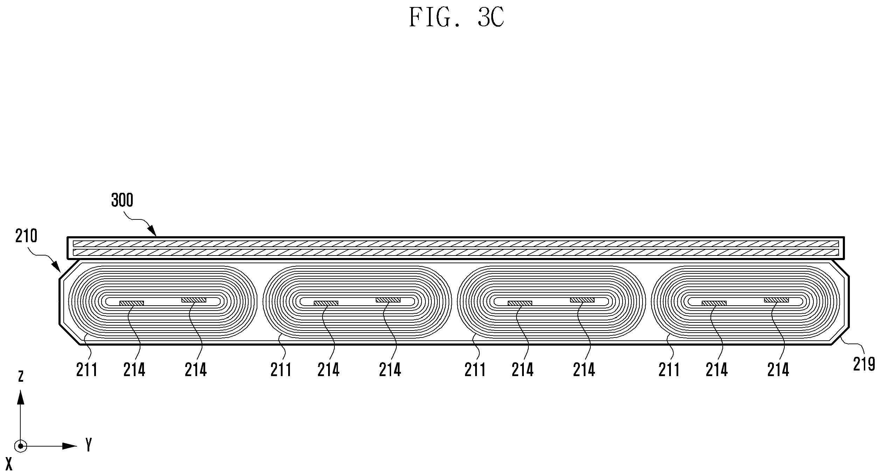

FIG. 3c is a cross-sectional view of a battery 210 and a battery protection member 300.

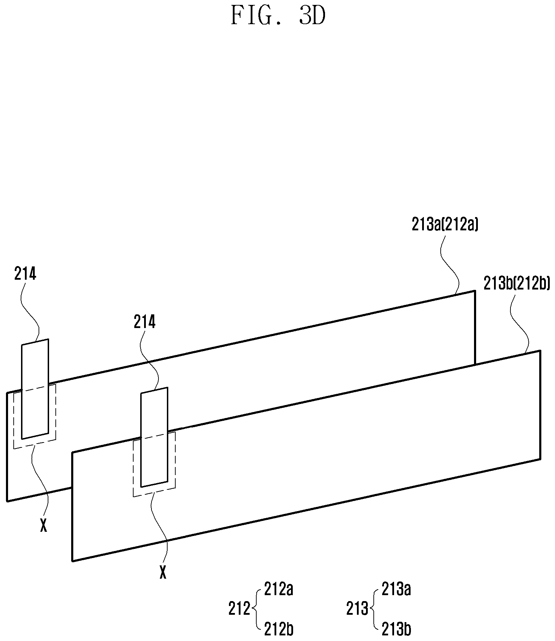

FIG. 3d is a perspective view illustrating the electrodes 212 of the battery 210 in an unfolded state.

The cross-section of FIG. 3b is a cross-section taken along the A-A direction of FIG. 3a.

The cross-section of FIG. 3c is a cross-section taken along the B-B direction of FIG. 3a.

With reference to FIGS. 3a and 3b, the battery protection member 300 may be positioned on the surface of the battery 210. The battery protection member 300 may include a pouch 310 and a porous membrane layer 320. The porous membrane layer 320 may include a porous material having pores and a non-Newtonian fluid 329 immersed in the pores. The battery protection member 300 may include at least one stacked porous membrane layer 320 (e.g., a first porous membrane layer 320a and a second porous membrane layer 320b). The pouch 310 may be a member that surrounds the exterior of the porous membrane. The pouch 310 may seal the exterior of the porous membrane to prevent and/or reduce leakage of the non-Newtonian fluid 329 described below.

The porous membrane layer 320 may include a stretched porous polymer film having pores formed by stretching and/or heat treating a polymer film, such as polyethylene or polypropylene, for example. In other embodiments, the porous membrane layer 320 may have various structures including pores, such as a woven fabric, a nonwoven fabric, and/or a foamed resin.

The non-Newtonian fluid 329 may be at least partially immersed in the porous membrane layer 320. In various embodiments, the non-Newtonian fluid 329 may be located in the gaps between the stacked porous membrane layers 320. The non-Newtonian fluid 329 may be located within the pores of the porous membrane layer 320 and in the gaps between the porous membrane layers 320 because of surface tension and capillary action.

The non-Newtonian fluid 329 may include a shear-thickening fluid (STF) or a dilatant liquid. The shear-thickening fluid may be a dispersion in which particles such as starch, polymer nanoparticles, silica, and/or calcium carbonate powder are dispersed in a dispersion medium such as water, ethylene glycol (EG), or polyethylene glycol (PEG), and may be a liquid exhibiting non-Newtonian behavior in which the viscosity increases because of a shear force applied to the dispersion from the outside. The shear-thickening fluid may include, for example, an aqueous starch solution (which may be referred to as ' Oobleck ') or D3O^{®}.

The porous membrane layer 320 immersed in a non-Newtonian fluid 329 is flexible when there is no shear force (e.g., impact, pressure, and penetration) applied from the outside of the battery 210, and thus may be deformed according to changes in the volume and deformation of the battery 210 that occur during the use of the battery 210. In addition, when a shear force is applied, the viscosity increases and thickens or hardens, thereby dispersing impact and pressure applied from the outside and protecting the battery 210 from penetration.

In various embodiments, the pouch 310 may be adhered to the surface of the battery 210. For example, an adhesive or a pressure-sensitive adhesive may be applied to the surface of the pouch 310 that contacts the battery 210. In various embodiments, one area of the pouch 310 that faces the battery 210 may include a double-sided adhesive tape 3111. One side of the double-sided adhesive tape 3111 may be adhered to the surface of the battery 210, and the other side of the double-sided adhesive tape 3111 may be adhered to the other area of the pouch 310 that faces the one area. The other area of the pouch 310 may be adhered to the double-sided adhesive tape 3111 on the exterior of the porous membrane layer 320, thereby surrounding the exterior of the porous membrane layer 320. In various embodiments, the other area of the pouch 310 may include a single-sided adhesive tape 3121 positioned such that the adhesive surface faces the double-sided adhesive tape 3111. The double-sided adhesive tape 3111 and the single-sided adhesive tape 3121 may be adhered to each other to effectively secure and seal the porous membrane layer 320.

The battery 210 may include an electrode 212. The electrode 212 may include, for example, a positive electrode 212a and a negative electrode 212b. The electrode 212 may include an active material of each electrode 212 and an electrode current collector 213 to which the active material is applied and which collects charges generated according to a reaction of the active material. For example, the positive electrode 212a may include a positive current collector 213a, and the negative electrode 212b may include a negative current collector 213b. The electrode current collector 213 may include a metal material suitable for the chemical reaction of each electrode 212. For example, the positive current collector 213a may include an aluminum foil, and the negative current collector 213b may include a copper foil.

An assembly including a positive electrode 212a and a negative electrode 212b may be referred to as an electrode 212 assembly or cell 211. A battery 210 may include one or more cells 211. For example, a plurality of cells 211 may be positioned within a battery case 219. In various embodiments, the cell 211 may be a jelly roll-type cell 211 in which one positive electrode 212a and one negative electrode 212b are rolled up to form a jelly roll shape, as illustrated in FIG. 3d. In other embodiments, the cell 211 may be a stack-type cell in which one or more positive electrodes 212a and negative electrodes 212b are stacked one on another.

In various embodiments, the electrode 212 of the battery 210 may include an electrode tab 214. The electrode tab 214 may be a member attached to the electrode current collector 213 to connect charges collected through the electrode current collector 213 to a positive electrode 212a or negative electrode 212b terminal of the battery 210. In various embodiments, the electrode tab 214 may be bonded (e.g., by soldering, brazing, and/or welding) to the electrode current collector 213.

With reference to FIGS. 3a and 3c again, the battery protection member 300 may be positioned on the surface of the battery 210 so as to overlap with the area X to which the electrode tab 214 is attached. For example, when viewed in a vertical direction (Z direction in the drawing), the battery protection member 300 may be positioned on the surface of the battery 210 so as to at least partially overlap with the electrode tab 214.

When the electrode current collector 213 and the electrode tab 214 are joined, protruding or sunken marks may be formed on the surface of the electrode tab 214 and/or the electrode current collector 213 because of welding or brazing. Such marks may damage structures such as a separator when pressure is applied to the surface of the battery 210 and may promote direct contact and reaction between the positive electrode 212a and the negative electrode 212b, resulting in a short circuit and/or fire. Therefore, by positioning the battery protection member 300 so as to overlap with the area of the electrode current collector 213 to which the electrode tab 214 is attached, the area of the battery 210 that is vulnerable to external impact, penetration, and/or pressure can be effectively protected.

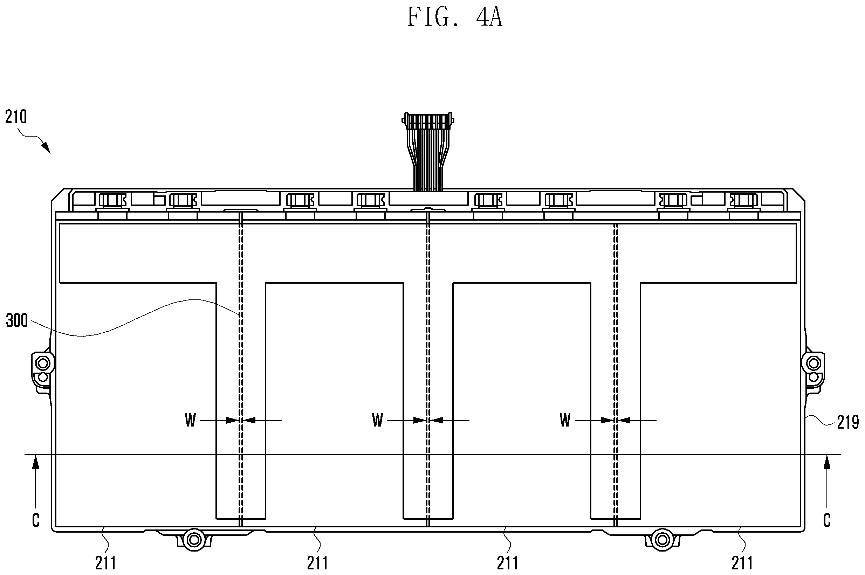

FIG. 4a is a plan view illustrating a battery 210 and a battery protection member 300.

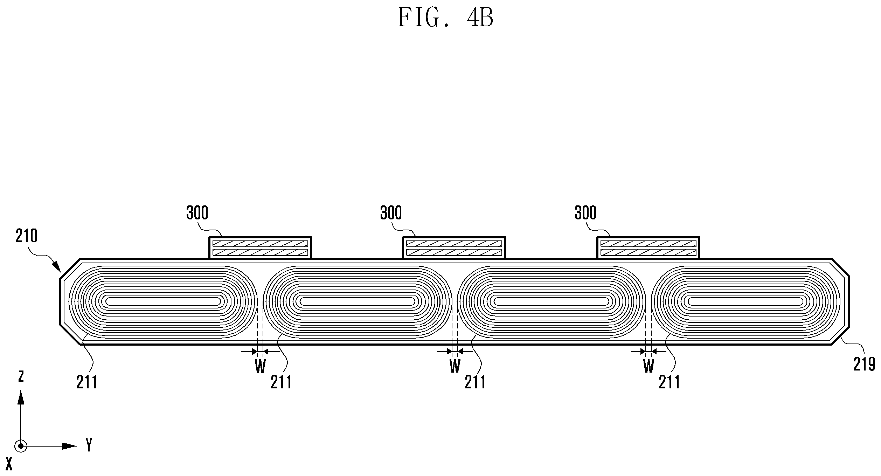

FIG. 4b is a cross-sectional view illustrating a battery 210 and a battery protection member 300.

The cross-section of FIG. 4b is a cross-section taken along the C-C direction of FIG. 4a.

With reference to FIGS. 4a and 4b, the battery 210 may include a plurality of cells 211. Each cell 211 may be, for example, a jelly roll-type cell 211 in which a positive electrode 212a and a negative electrode 212b are rolled up in a stacked state, or a stack-type cell in which one or more positive electrodes 212a and negative electrodes 212b are alternately stacked. The plurality of cells 211 may be positioned separately from each other inside the battery case 219. For example, the plurality of cells 211 may be positioned spaced apart from each other at a predetermined interval W.

The battery protection member 300 may be positioned to at least partially overlap an area inside the battery 210 where a predetermined interval W is formed. For example, the battery protection member 300 may be positioned on the surface of the battery 210 so as to overlap with an area where each cell 211 is spaced apart from each other when viewed from the upper direction (e.g., the z direction) of the battery 210.

The boundary area between the plurality of cells 211 of the battery 210 is an area where the battery 210 case is not supported by the internal cells 211 or where the support strength is weakened, and thus may be relatively easily damaged by external impact or penetration. Therefore, by disposing the battery protection member 300 so as to overlap with the boundary area between the cells 211, the area of the battery 210 that is vulnerable to external impact, penetration, and/or pressure can be effectively protected.

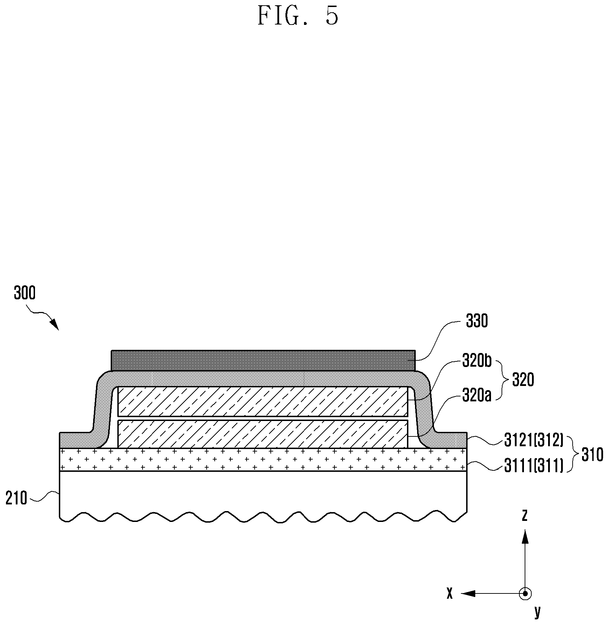

FIG. 5 is a cross-sectional view illustrating a battery protection member 300 according to various embodiments.

With reference to FIG. 5, the battery protection member 300 may include a thermally conductive sheet 330. The thermally conductive sheet 330 may be positioned on the surface of the pouch 310. In various embodiments, the thermally conductive sheet 330 may be spaced apart from the battery 210 with the pouch 310 and the porous membrane layer 320 interposed therebetween. In other embodiments, the thermally conductive sheet 330 may be positioned between the pouch 310 (e.g., double-sided adhesive tape 3111) and the battery 210. The thermally conductive sheet 330 may be a member that disperses heat generated in the battery 210 and effectively dissipates heat to the outside of the battery 210. The thermally conductive sheet 330 may include, for example, a graphite sheet, silicone, and/or carbon fiber.

In various embodiments, thermally conductive particles may be dispersed in the non-Newtonian fluid 329 immersed in the porous membrane layer 320. The thermally conductive particles may be particles that increase the thermal conductivity of the porous membrane and thereby reduce the thermal resistance of the battery protection member 300. The thermally conductive particles may include thermally conductive materials such as graphite particles, metal particles, and/or diamond particles.

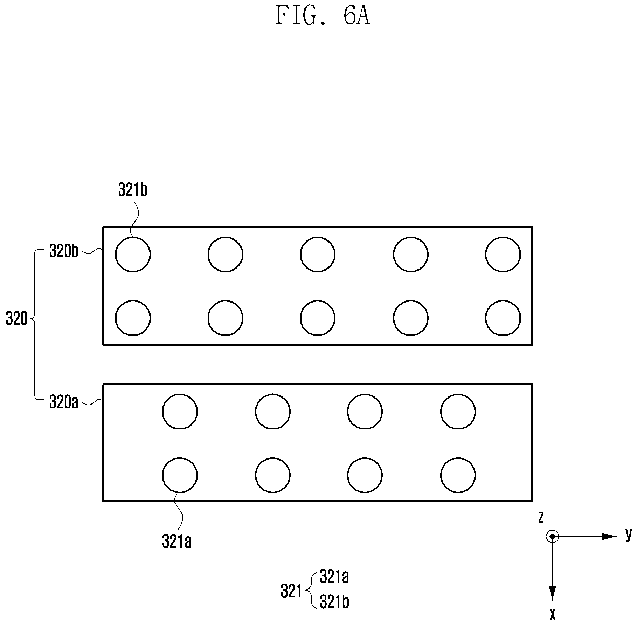

FIG. 6a is a plan view illustrating a porous membrane layer 320 according to various embodiments.

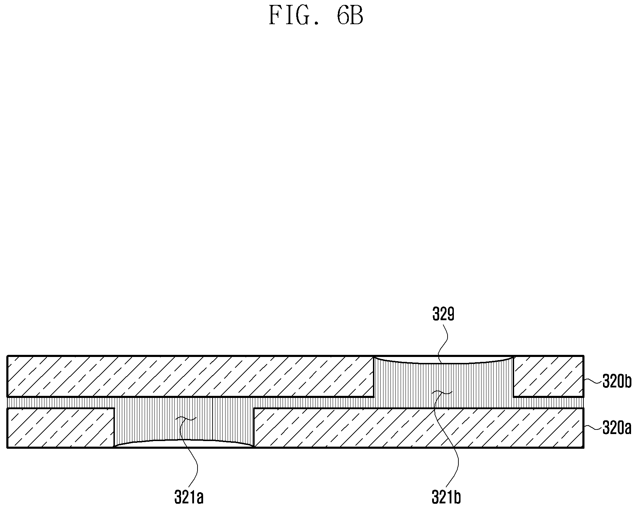

FIG. 6b a cross-sectional view illustrating a porous membrane layer 320 according to various embodiments.

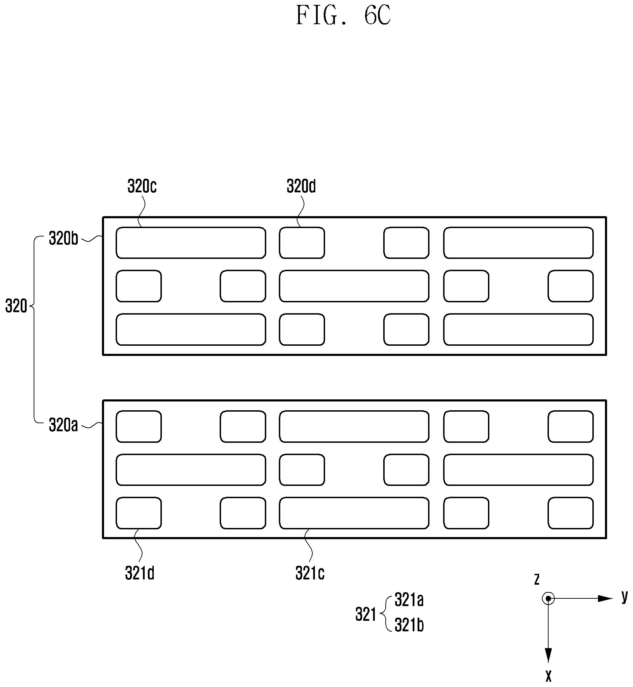

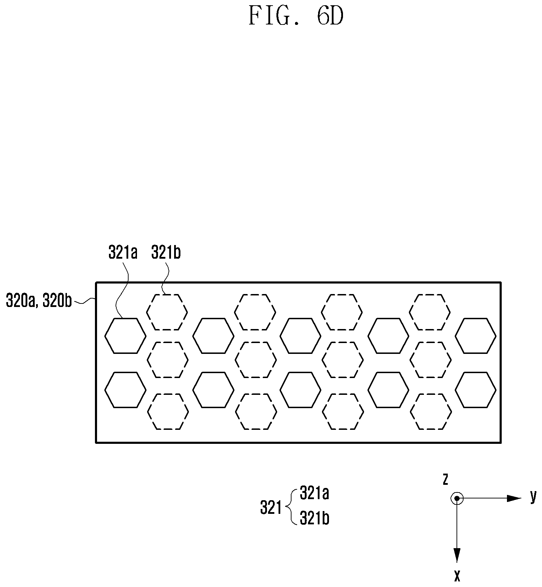

FIG. 6c and FIG. 6d are plan views illustrating porous membrane layers 320 according to various embodiments.

With reference to FIGS. 6a and 6b, the porous membrane layer 320 may include a through hole 321. The through hole 321 may penetrate the porous membrane in the thickness direction. A non-Newtonian fluid 329 may at least partially fill the inside of the through hole 321. By including the through hole 321 filled with the non-Newtonian fluid 329 in the porous membrane layer 320, the content of the non-Newtonian fluid 329 in the porous membrane layer 320 may increase. Therefore, when a shear force is applied from the outside, the strength of the porous membrane layer 320 may be improved.

In various embodiments, the through holes 321a and 321b of at least one porous membrane layer 320 may be disposed to be at least partially staggered from each other. For example, when viewed from above (the z-axis direction), the through holes 321a of the first porous membrane layer 320a may be disposed to be staggered from the through holes 321b of the second porous membrane layer 320b.

With reference to FIG. 6b, the through holes 321a and 321b of at least one porous membrane layer 320 are disposed in an alternating manner so that at least one side of the through hole 321a of one porous membrane layer 320 (e.g., the first porous membrane layer 320a) may be blocked by another porous membrane layer 320 (e.g., the second porous membrane layer 320b). A non-Newtonian fluid 329 within the through hole 321 may be retained by surface tension on the surface of the porous membrane layer 320. Therefore, by staggering the through holes 321a and 321b, the retention capacity of the porous membrane layer 320 for non-Newtonian fluid 329 because of surface tension can be improved.

With reference to FIGS. 6c and 6d, the through holes 321 may have various shapes (e.g., various polygons such as squares, extended squares, rounded squares, hexagons, and/or ovals). In various embodiments, the through holes 321 may include first through holes 321a and second through holes 321b having different dimensions (e.g., y-direction lengths). The first through holes 321a and second through holes 321b may be disposed alternately. Additionally, the first through holes 321a of the first porous membrane layer 320a and the second through holes 321b of the second porous membrane layer 320b may be disposed to at least partially overlap. By overlapping the first through hole 321a and the second through hole 321b having different sizes, the surface area inside the through hole 321 may be increased.

With reference to FIG. 6d, in various embodiments, the through holes 321a of the first porous membrane layer 320a and the through holes 321b of the second porous membrane layer 320b may be disposed to form a zigzag shape when the first porous membrane layer 320a and the second porous membrane layer 320b are stacked one on another. For example, the through holes 321a of the first porous membrane layer 320a and the second through holes 321b of the membrane layer 320b may be disposed to have 1/6 rotational symmetry when viewed in the z-axis direction. By disposing the through holes 321 in a zigzag manner, the ratio of the area occupied by the through holes 321 in the porous membrane layer 320 may be increased.

An electronic device 200 according to various embodiments of the present invention comprises a battery 210 and a battery protection member 300. The battery protection member 300 may comprise: at least one porous membrane layer 320 including pores and stacked one on another; a non-Newtonian fluid 329 immersed in the at least one porous membrane layer 320; and a pouch 310 surrounding the exterior of the at least one porous membrane layer 320.

In various embodiments, one side of the pouch 310 may be attached to the surface of the battery 210.

In various embodiments, the one area of the pouch 310 attached to the surface of the battery 210 may include a double-sided adhesive tape 3111, and the other area of the pouch 310 facing the one area may be adhered to the double-sided adhesive tape 3111 on the exterior of the at least one porous membrane layer 320 to surround the exterior of the at least one porous membrane layer 320.

In various embodiments, the other area may include a single-sided adhesive tape 3121 oriented such that the adhesive surface faces the double-sided adhesive tape 3111 and the at least one porous membrane layer 320.

In various embodiments, the battery 210 may include a plurality of electrodes 212 including an electrode current collector 213 and an electrode tab 214 bonded to the electrode current collector 213, and the battery protection member 300 may be positioned on the surface of the battery 210 so as to overlap with an area where the electrode current collector 213 and the electrode tab 214 are bonded.

In various embodiments, the battery 210 may include a plurality of cells 211 disposed at a predetermined interval therebetween, and the battery protection member 300 may be positioned on the surface of the battery 210 so as to overlap with an area inside the battery 210 where the predetermined interval is formed.

In various embodiments, the battery protection member 300 may include a thermally conductive sheet 330 positioned on the surface of the pouch 310.

In various embodiments, the thermally conductive sheet 330 may include a graphite sheet.

In various embodiments, the non-Newtonian fluid 329 may include thermally conductive particles dispersed in the non-Newtonian fluid 329.

In various embodiments, the thermally conductive particles may comprise graphite particles.

In various embodiments, the at least one porous membrane layer 320 may include a through hole 321 formed on a surface of the membrane, and the non-Newtonian fluid 329 may be positioned such that at least a portion of the through hole 321 at least partially fills the interior of the through hole.

In various embodiments, the through holes 321 of one of the at least one porous membrane layers 320 may be disposed to be at least partially staggered from the through holes 321 of adjacent another layer.

In various embodiments, the at least one porous membrane layer 320 may comprise a stretched porous polymer film.

A battery protection member 300 according to various embodiments of the present invention, as the battery protection member 300 of the electronic device 200 including the battery 210, may comprise: at least one porous membrane layer 320 including pores and stacked one on another; a non-Newtonian fluid 329 immersed in the at least one porous membrane layer 320; and a pouch 310 surrounding the exterior of the at least one porous membrane layer 320.

In various embodiments, the one area of the pouch 310 facing the battery 210 may include a double-sided adhesive tape 3111, and the other area of the pouch 310 facing the one area is adhered to the double-sided adhesive tape 3111 so as to surround the exterior of the at least one porous membrane layer 320, and the one side of the double-sided adhesive tape 3111 may be attached to the surface of the battery 210.

In various embodiments, the battery protection member 300 may include a thermally conductive sheet 330 positioned on the surface of the pouch 310.

In various embodiments, the non-Newtonian fluid 329 may include thermally conductive particles dispersed in the non-Newtonian fluid 329.

In various embodiments, the at least one porous membrane layer 320 may include a through hole 321 formed on a surface of the membrane, and the non-Newtonian fluid 329 may be positioned such that at least a portion of the through hole 321 at least partially fills the interior of the through-hole.

In various embodiments, the through holes 321 of one of the at least one porous membrane layers 320 may be disposed to be at least partially staggered from the through holes 321 of adjacent another layer.

In various embodiments, the at least one porous membrane layer 320 may comprise a stretched porous polymer film.

Furthermore, the embodiments of the present invention disclosed in this specification and drawings are merely specific examples presented to easily explain the technical contents according to the embodiments of the present invention and to help understand the embodiments of the present invention, and are not intended to limit the scope of the embodiments of the present invention. Therefore, the scope of the various embodiments of the present invention should be interpreted as including all changes or modified forms derived based on the technical ideas of the various embodiments of the present invention in addition to the embodiments disclosed herein.

## Claims

1. An electronic device comprising:
a battery 210; and
a battery protection member 300, wherein
the battery protection member 300 comprises:
at least one porous membrane layer 320 including pores and stacked one on another;
a non-Newtonian fluid 329 immersed in the at least one porous membrane layer 320;
and
a pouch 310 surrounding the exterior of the at least one porous membrane layer 320.

2. The electronic device of claim 1, wherein
the one side of the pouch 310 is attached to the surface of the battery 210.

3. The electronic device of claim 2, wherein
the one area of the pouch 310 attached to the surface of the battery 210 comprises a double-sided adhesive tape 3111, and
the other area of the pouch 310 facing the one area is adhered to the double-sided adhesive tape 3111 at the exterior of the at least one porous membrane layer 320, thereby surrounding the exterior of the at least one porous membrane layer 320.

4. The electronic device of claim 3, wherein
the other area comprises a single-sided adhesive tape 3121 oriented so that the adhesive surface faces the double-sided adhesive tape 3111 and the at least one porous membrane layer 320.

5. The electronic device of claim 1, wherein
the battery 210 comprises a plurality of electrodes 212 including an electrode current collector 213 and an electrode tab 214 joined to the electrode current collector 213, and
the battery protection member 300 is positioned on the surface of the battery 210 so as to overlap with the area where the electrode current collector 213 and the electrode tab 214 are joined.

6. The electronic device of claim 1, wherein
the battery 210 comprises a plurality of cells 211 disposed at a predetermined interval therebetween, and
the battery protection member 300 is positioned on the surface of the battery 210 so as to overlap with an area inside the battery 210 where the predetermined interval is formed.

7. The electronic device of claim 1, wherein
the battery protection member 300 comprises a thermally conductive sheet 330 positioned on the surface of the pouch 310.

8. The electronic device of claim 7, wherein
the thermally conductive sheet 330 comprises a graphite sheet.

9. The electronic device of claim 1, wherein
the non-Newtonian fluid 329 comprises thermally conductive particles dispersed in the non-Newtonian fluid 329.

10. The electronic device of claim 9, wherein
the thermally conductive particles comprise graphite particles.

11. The electronic device of claim 1, wherein
the at least one porous membrane layer 320 comprises a through hole 321 formed on the surface of the membrane, and
the non-Newtonian fluid 329 is positioned so as to at least partially fill the inside of the through hole 321.

12. The electronic device of claim 11, wherein
the through holes 321 of one of the at least one porous membrane layers 320 are disposed to be at least partially staggered from the through holes 321 of adjacent another layer.

13. The electronic device of claim 1, wherein
at least one porous membrane layer 320 comprises a stretched porous polymer film.

14. A battery protection member 300 of an electronic device 200 including a battery 210 comprising:
at least one porous membrane layer 320 comprising pores and stacked one on another;
a non-Newtonian fluid 329 immersed in at least one porous membrane layer 320; and
a pouch 310 surrounding the exterior of at least one porous membrane layer 320.

15. The battery protection member of claim 14, wherein
the one area of the pouch 310 facing the battery 210 comprises a double-sided adhesive tape 3111,
the other area of the pouch 310 facing the one area is bonded with the double-sided adhesive tape 3111 to surround the exterior of the at least one porous membrane layer 320, and
the one side of the double-sided adhesive tape 3111 is attached to the surface of the battery 210.
